# FASCICULE DE BREVET EUROPEEN

(11) **EP 1 101 030 B1**
(45) Date de publication et mention de la délivrance du brevet: **30.07.2003**
(21) Numéro de dépôt: 99957646.5
(22) Date de dépôt: 25.06.1999
(51) Int. Cl.: F02K 9/86

(54) **TUYERE COMPACTE ET MODULABLE POUR LE PILOTAGE D'ENGINS AEROSPATIAUX**
KOMPAKTES, VERÄNDERLICHES SCHUBROHR ZUR STEUERUNG VON FLUGKÖRPERN
COMPACT AND ADJUSTABLE TAILPIPE FOR PILOTING AEROSPACE CRAFT

(30) Priorité: 29.06.1998 FR 9808211
(43) Date de publication de la demande: 23.05.2001
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: LE FUR, Thierry, F-33700 Mérignac (FR); DEBONS, Bernard, F-33950 Lege (FR); LAFOND, André, F-33700 Mérignac (FR); DUMORTIER, André, F-33700 Mérignac (FR)
(74) Mandataire: Joly, Jean-Jacques
(86) Numéro de dépôt international: FR9901530
(87) Numéro de publication internationale: WO00000731

(56) Documents cités:
- DE-A- 2 320 076
- FR-A- 1 460 610
- US-A- 3 094 072
- US-A- 3 929 289
- US-A- 3 989 191

## Description

### Domaine de l'invention

L'invention concerne un dispositif capable de délivrer une poussée latérale modulable de façon commandée pour le pilotage d'engins aérospatiaux tels que des missiles, des lanceurs ou encore des satellites, en utilisant le principe de propulsion par réaction ou par éjection de gaz.

### Arrière-plan de l'invention

Le principe de pilotage d'un engin aérospatial par des dispositifs délivrant une poussée modulable latérale, c'est-à-dire perpendiculairement à l'axe de l'engin, pour lui faire suivre une trajectoire commandée (pilotage en force) ou corriger son attitude (pilotage en moment) est déjà bien connu. Chaque dispositif de poussée modulable comprend habituellement une vanne alimentée par un générateur de gaz et commandée par un actionneur, lui-même piloté par un calculateur de bord au moyen de signaux électriques.

Pour les vannes axisymétriques, il est classique d'utiliser un pointeau mobile dont la position dans l'écoulement des gaz, commandée par un actionneur proportionnel, détermine la section de passage des gaz qui sortent par une tuyère à divergent fixe, et détermine donc le niveau de poussée, suivant le principe de propulsion par réaction.

Dans les systèmes propulsifs à pointeau mobile classiques, une part importante de la poussée est reprise par la paroi du divergent (intégrale surfacique des pressions statiques). La longueur du divergent fixe devrait donc être importante pour maximiser la poussée. Elle est toutefois limitée en pratique pour tenir compte des phénomènes d'adaptation à la pression extérieure, de sorte que la longueur du divergent fixe résulte d'un compromis entre ces exigences contradictoires.

Aussi, les dispositifs classiques à pointeau mobile et divergent fixe présentent deux inconvénients : encombrement relativement important suivant l'axe de la poussée et défaut permanent d'optimisation de la poussée produite. ces inconvénients étant plus particulièrement sensibles pour des applications à des engins de diamètre relativement petit et dont l'altitude varie fortement en vol, tels que des missiles intercepteurs sol-air.

### Objet et résumé de l'invention

L'invention a pour but de proposer des dispositifs de poussée latérale modulable pour le pilotage d'engins aérospatiaux présentant un encombrement réduit, notamment dans la direction de la poussée, et ayant, par conséquent, du fait de leur compacité, une meilleure aptitude à l'intégration dans des engins et une masse moins importante. En particulier, un but de l'invention est de proposer des dispositifs de poussée latérale modulable susceptibles d'être intégrés dans des engins tout en respectant des contraintes de dimensionnement de ceux-ci, telle que la limitation du diamètre extérieur.

Un autre but de l'invention est de proposer des dispositifs de poussée non seulement compacts, mais capables aussi de délivrer une poussée optimale quelle que soit la pression extérieure, donc quelle que soit l'altitude.

A cet effet, la présente invention propose un dispositif comprenant : un pointeau mobile, un corps de vanne comportant une chambre entourant partiellement le pointeau, au moins une ouverture d'admission de gaz s'ouvrant dans la chambre, et une ouverture de sortie de gaz s'ouvrant dans la chambre et délimitée par une partie de paroi qui détermine avec une partie de nez du pointeau une section de sortie de gaz hors de la chambre ; et des moyens d'actionnement pour commander la position du pointeau dans le corps de vanne par action sur une partie d'extrémité arrière du pointeau, dispositif dans lequel le nez du pointeau mobile présente un profil concave aérodynamique et la partie de paroi qui délimite la sortie de la chambre est conformée de manière à pouvoir diriger les gaz sortants essentiellement vers la concavité du nez de pointeau.

Ainsi, le pointeau remplit à la fois la fonction d'organe mobile permettant une modulation de poussée par réglage de la section de sortie de gaz et la fonction d'organe principal de reprise de la poussée produite.

De la sorte, et contrairement aux dispositifs classiques de poussée modulable, il n'est pas nécessaire de prolonger la sortie de gaz de la chambre par un divergent, ou alors de façon très raccourcie. L'encombrement latéral du dispositif de poussée est par conséquent réduit, ce qui permet de concevoir des engins ayant un diamètre extérieur limité. Les moyens d'actionnement du pointeau agissant à l'arrière de celui-ci, ils sont disposés à l'intérieur et n'encombrent pas, par conséquent, la périphérie de l'engin. En outre, Le jet de gaz sortant est confiné à sa périphérie par l'effet de la pression atmosphérique environnante et s'adapte automatiquement aux variations de pression ambiante produisant ainsi toujours une poussée optimale en fonction de l'altitude.

Une architecture de dispositif de poussée auto-adaptatif avec un corps central en forme de pointe tronquée, ou non, à profil concave aérodynamique, et avec une tuyère au moins en partie virtuelle est connue en soi, notamment sous l'appellation "tuyère à détente-déflexion", ou l'appellation anglaise "aerospike", mais dans le domaine de la propulsion d'engins aérospatiaux. Dans ce domaine de propulsion d'engins aérospatiaux, il a été suggéré par les brevets US 3 888 419 et US 3 989 191 de ménager une possibilité limitée de variation d'intensité et de direction de la poussée par modification de la position d'une partie avant d'un corps central métallique au moyen d'actionneurs hydrauliques logés à l'intérieur de celui-ci. La fiabilité d'un tel dispositif exposé à des gaz chauds apparaît difficile à garantir. On peut encore citer le brevet US 3 929 289 qui décrit un dispositif de poussée axiale avec un corps central ayant une partie extérieure en graphite. La poussée peut être modulée par variation de la position axiale d'une enveloppe entourant le corps central, ce qui requiert des moyens d'actionnement extemes.

Selon une particularité avantageuse en compacité et capacité d'intégration du dispositif de poussée conforme à l'invention, le corps de vanne est noyé dans un générateur de gaz propulsifs. Le corps de vanne et le pointeau, qui sont au contact des gaz chauds, sont, de préférence, en matériau composite thermostructural, notamment en un matériau composite à matrice céramique tel qu'un matériau composite C/SiC (renfort en fibres de carbone densifié par une matrice en carbure de silicium).

Selon une autre particularité du dispositif de poussée conforme à l'invention, les moyens d'actionnement sont du type proportionnel, permettant une modulation complète de la poussée entre tout et rien. Les moyens d'actionnement sont par exemple de type électromécanique et peuvent être reliés au pointeau par un arbre rotatif muni d'un excentrique engagé dans une gorge périphérique de la partie d'extrémité arrière du pointeau.

Selon encore une autre particularité du dispositif de poussée conforme à l'invention, les moyens d'actionnement sont isolés thermiquement par rapport aux gaz chauds circulant dans le corps de vanne.

### Brève description des dessins

- la Figure 1 des dessins annexés présente un exemple de montage de vannes proportionnelles indépendantes coplanaires logées dans un générateur de gaz pour le pilotage en force d'un missile intercepteur à calibre limité ;
- la Figure 2 représente un mode de réalisation particulier d'un dispositif de poussé modulable conforme à l'invention, vu en partie arraché ; et
- la Figure 3 est une vue en coupe montrant, en partie supérieure, l'intégration du dispositif de la Figure 2 dans un engin et, en partie inférieure, à titre de comparaison, l'intégration d'un dispositif de poussée modulable de l'art antérieur.

### Description de modes préférés de réalisation

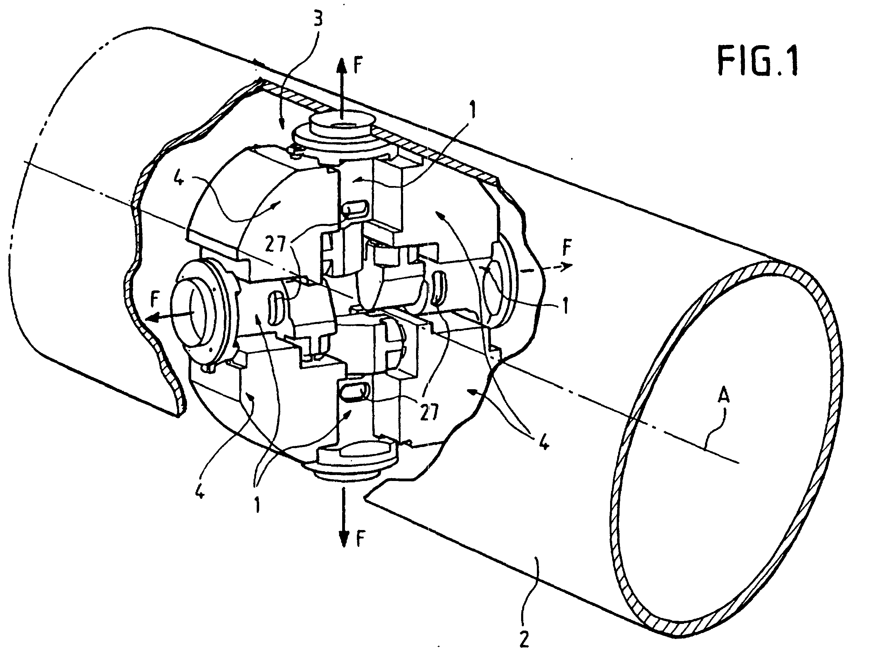

La figure 1 illustre l'intégration de plusieurs dispositifs 1 de poussée modulable conformes à l'invention dans un engin aérospatial tel qu'un missile intercepteur 2 à calibre limité. Par calibre limité, on entend ici un diamètre relativement faible du corps du missile.

Les dispositifs de poussée 1 délivrent des poussées modulables dans des directions (flèches F) sensiblement normales à l'axe principal A de l'engin 2. Ils sont commandés par des actionneurs logés dans des carters étanches 4 et pilotés par un calculateur de bord de l'engin.

Dans l'exemple illustré, les dispositifs de poussée modulable sont au nombre de 4, répartis régulièrement autour de l'axe A de l'engin 2 et de façon coplanaire, c'est-à-dire délivrant des poussées latérales dans des directions situées dans un même plan orthogonal à l'axe A. Dans le cas du pilotage en force, les poussées latérales sont appliquée sensiblement au niveau du centre de gravité de l'engin.

Les dispositifs de poussée 1 sont noyés à l'intérieur même d'un générateur de gaz 3 qui produit les gaz propulsifs alimentant les dispositifs de poussée. Sur la figure 1, les organes de l'engin 2, autres que l'ensemble des dispositifs de poussée modulable 1, ne sont pas représentés.

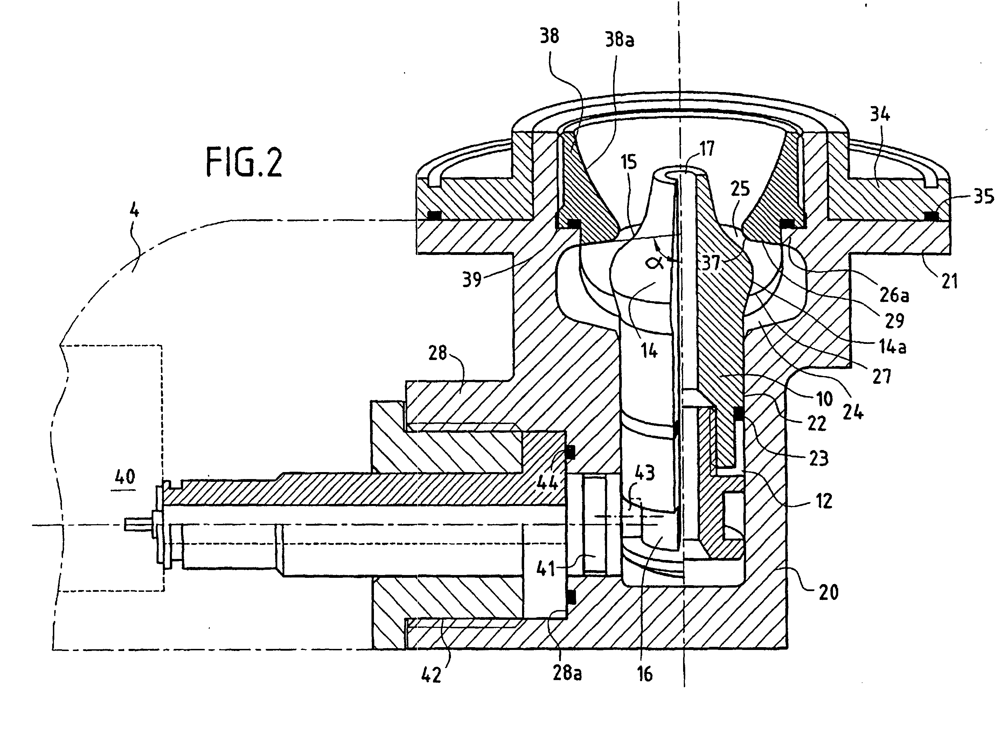

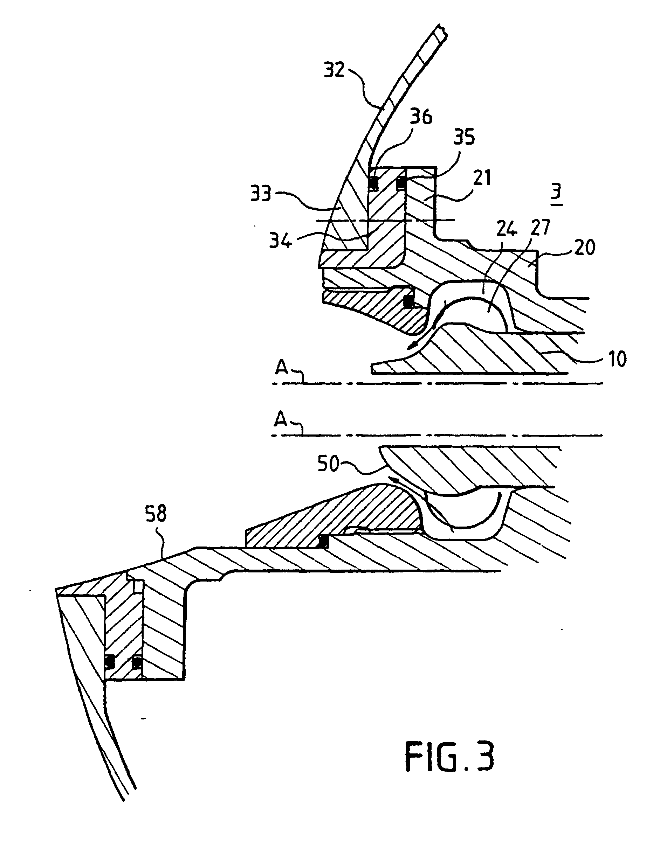

On se référera maintenant aux Figures 2 et 3 (partie supérieure) qui illustrent plus en détail un des dispositifs de poussée modulable de la figure 1.

Le dispositif de poussée modulable 1 comprend un pointeau axisymétrique 10 mobile à l'intérieur d'un corps de vanne 20. Le corps de vanne est noyé dans un générateur de gaz chauds 30 et est fixé, par exemple par vissage, à l'enveloppe extérieure 32 d'un engin aérospatial à piloter, par exemple un missile. A cet effet, le corps de vanne 20 est muni d'une collerette circulaire 21 qui s'appuie sur la paroi interne d'une partie surépaissie 33 de l'enveloppe 32 avec interposition d'une bague isolante cylindrique 34 à section méridienne en L. Des joints d'étanchéité toriques 35, 36 sont interposés entre la bague 34 et la collerette 21 et entre la bague 34 et la paroi interne de l'enveloppe 32.

Le pointeau 10 est mobile suivant une direction A transversale par rapport à la direction longitudinale de l'engin à piloter. Il comprend une tige cylindrique 12 coulissant à l'intérieur d'un logement cylindrique 22 du corps de vanne avec interposition d'un segment d'étanchéité annulaire 23 logé dans une rainure périphérique de la tige 12. A sa partie d'extrémité avant, ou nez 14, le pointeau 10 présente une partie renflée 14a qui se situe dans une chambre 24 du corps de vanne de diamètre supérieur à celui du logement 22. Entre la partie renflée 14a et son extrémité avant, le pointeau 10 présente une partie 15 de diamètre décroissant formant un profil concave aérodynamique.

La chambre 26 présente une ouverture de sortie de gaz 25 délimitée par le col géométrique 37 d'un insert axisymétrique 38 vissé dans un logement cylindrique formé par une partie avant 26 du corps de vanne. Le col géométrique 37 fait office de siège pour le nez 14 du pointeau. L'insert 38 s'appuie sur un rebord interne 26a du corps de vanne, avec interposition d'un joint d'étanchéité 39. Une ou plusieurs lumières 27 d'admission des gaz propulsifs sont formées dans la paroi périphérique de la chambre 26 (voir aussi figure 1). A son extrémité arrière opposée au nez 14, le pointeau 10 présente une gorge périphérique 16. Un alésage axial 17 traverse le pointeau 10 sur toute sa longueur.

La position du pointeau dans le corps de vanne est commandée au moyen d'un actionneur électromécanique 40. Celui-ci est relié au pointeau 10 par un arbre 41 supporté par fourreau 42 et terminé par un excentrique 43 engagé dans la gorge 16. Le fourreau 42 est vissé dans un logement cylindrique 28 du corps de vanne jusqu'à venir en butée contre un rebord 28a formé dans le corps de vanne. Un joint d'étanchéité annulaire 44 est interposé entre le fourreau 42 et le rebord 28a. Le logement 28 a un axe orthogonal à celui du logement 22.

Le fonctionnement du dispositif de poussée décrit ci-dessus est le suivant. Les gaz chauds produits par le générateur de gaz et admis dans la chambre 24 à travers les lumières 27 sont éjectés à travers la sortie 25 en étant dirigés sur la surface concave 15 du nez 14 du pointeau. A cet effet, la partie de la paroi interne 29 qui borde l'ouverture 25 forme avec l'axe A un angle α supérieur à 45°, de préférence supérieur à 60° et pouvant atteindre 90° afin de diriger les gaz sur la surface 45 légèrement vers l'avant, voire normalement à l'axe A. Cette partie de paroi interne 29 est, dans l'exemple illustré, formée par des parties de paroi interne du corps de vanne 20 et de la pièce 38 qui se raccordent l'une à l'autre. La poussée exercée est ainsi reprise principalement par le pointeau 10 dans la direction A, latéralement par rapport à l'engin.

A l'extérieur de la sortie de gaz 25, la pièce 38 peut être réalisée de manière à former une tuyère très raccourcie avec une amorce de divergent 28a se raccordant au col géométrique 37. Cela n'est toutefois pas indispensable en l'absence d'écoulement aérodynamique externe suivant l'axe de l'engin, l'enveloppe du jet de gaz sortant prenant une forme qui s'adapte automatiquement à la pression extérieure en "s'appuyant" sur l'atmosphère environnante. Le dispositif pourra donc éventuellement être totalement dépourvu de divergent de tuyère.

Dans le cas d'un missile ou d'un lanceur fonctionnant dans l'atmosphère, on aura toutefois avantage à maintenir une longueur minimale de divergent pour faire office de capotage aérodynamique et limiter les interactions du jet de gaz éjectés au niveau du pointeau avec l'écoulement externe le long du corps de l'engin.

La Figure 3 (partie inférieure) montre la forme qu'il conviendrait de donner à une tuyère 58 en utilisant un pointeau 50 dépourvu de nez aérodynamique optimisé de type "aérospike", comme dans l'art antérieur, et obtenir une performance équivalente. La comparaison des parties inférieure et supérieure de la Figure 3 montre le gain d'encombrement considérable apporté par l'invention tout en maintenant le nez du pointeau masqué par rapport aux écoulements externes le long de l'enveloppe 32 de l'engin. De plus, dans l'art antérieur, la tuyère fixe est de forme prédéterminée, non adaptée à des conditions de vol de l'engin à différentes altitudes.

La rotation de l'arbre 41 au moyen de l'actionneur 40 permet, par déplacement de l'excentrique dans la gorge 16, de faire coulisser le pointeau 10 dans le logement 22, donc de faire varier la section de sortie des gaz et, par voie de conséquence, l'intensité de la poussée reprise par le pointeau. On utilise de préférence un actionneur proportionnel, ce qui permet de régler la poussée à toute valeur désirée. L'alésage 17 permet d'équilibrer les pressions qui s'exercent aux extrémités du pointeau, de sorte que le déplacement du pointeau est facilité. Les différents dispositifs semblables de poussée modulable répartis à la périphérie de l'engin à piloter permettent, par combinaison entre les poussées exercées, de produire la composante de poussée latérale nécessaire, le cas échéant, à la correction de l'attitude de l'engin, ou à la déviation de la trajectoire (pilotage en force).

Le pointeau 10 et le corps de vanne 20 sont exposés directement aux gaz chauds, ceux-ci étant même dirigés contre le nez du pointeau. Il est donc nécessaire d'utiliser pour leur réalisation des matériaux capables de résister à des températures élevées. On utilisera de préférence un matériau composite thermostructural. Les matériaux composites thermostructuraux sont remarquables par leur légèreté, leurs bonnes propriétés mécaniques et par leur capacité à les conserver à hautes températures. Ils sont formés d'un renfort fibreux en fibres réfractaires, notamment carbone ou céramique, densifié par une matrice réfractaire également telle qu'en carbone ou céramique. Compte tenu du niveau de température et des sollicitations physico-chimiques (érosion) rencontrés, on utilise de préférence un matériau composite à matrice céramique (CMC) tel qu'un matériau composite C/SiC à renfort en fibres de carbone et matrice en carbure de silicium. L'utilisation de matériaux composites thermostructuraux permet en particulier de s'affranchir des systèmes complexes de refroidissement utilisés sur la plupart des tuyères à corps central connues aujourd'hui. L'arbre 41 du dispositif d'actionnement pourra être réalisé dans le même matériau. L'actionneur 40, du fait de son éloignement des gaz chauds, n'est pas soumis aux mêmes températures élevées. Il est isolé thermiquement en interposant des couches de matériau isolant le long du trajet de l'arbre 41 et en étant logé dans le carter étanche 4. Quant aux différents joints d'étanchéité, ils peuvent être réalisés en matériau à base de graphite, dans les parties exposées aux températures les plus élevées.

## Revendications

1. Dispositif de poussée modulable pour le pilotage d'engin aérospatial, par génération d'une poussée latérale dirigée sensiblement perpendiculairement à un axe principal de l'engin, le dispositif de poussée comprenant : un pointeau mobile (10) ; un corps de vanne (20) comportant une chambre (24) entourant partiellement le pointeau, au moins une ouverture (27) d'admission de gaz s'ouvrant dans la chambre, et une ouverture de sortie de gaz (25) s'ouvrant dans la chambre et délimitée par une partie de paroi qui détermine avec une partie de nez (14) du pointeau une section de sortie de gaz hors de la chambre ; et des moyens d'actionnement (40, 41, 43) pour commander la position du pointeau dans le corps de vanne par action sur une partie d'extrémité arrière du pointeau,
**caractérisé en ce que** le nez (14) du pointeau mobile (10) présente un profil concave aérodynamique (15) et la partie de paroi (29) qui délimite la sortie (25) de la chambre est conformée de manière à pouvoir diriger les gaz sortant essentiellement vers la concavité du nez de pointeau.

2. Dispositif selon la revendication 1, **caractérisé en ce que** la sortie de gaz (25) est formée par un col géométrique (37) qui se raccorde à l'extérieur de la sortie de gaz à une amorce de divergent (38a) formant une tuyère très raccourcie.

3. Dispositif selon la revendication 1, **caractérisé en ce qu'**il est dépourvu de divergent de tuyère à l'extérieur de la sortie de gaz.

4. Dispositif selon l'une quelconque des revendications 1 à 3, **caractérisé en ce que** le corps de vanne (20) est noyé dans un générateur de gaz propulsifs (3).

5. Dispositif selon la revendication 4, **caractérisé en ce que** les moyens d'actionnement sont noyés dans le générateur (31) de gaz propulsifs et isolés thermiquement par rapport aux gaz produits par le générateur.

6. Dispositif selon l'une quelconque des revendications 1 à 5, **caractérisé en ce que** le corps de vanne (20) et le pointeau (10) sont en un matériau composite thermostructural.

7. Dispositif selon la revendication 5, **caractérisé en ce que** le corps de vanne (20) et le pointeau (10) sont en un matériau composite à matrice céramique.

8. Dispositif selon l'une quelconque des revendications 1 à 7, **caractérisé en ce que** le pointeau (10) est muni d'un alésage axial (17) sur toute sa longueur.

9. Dispositif selon l'une quelconque des revendications 1 à 8, **caractérisé en ce que** les moyens d'actionnement sont de type proportionnel.

10. Dispositif selon l'une quelconque des revendications 1 à 9, **caractérisé en ce que** les moyens d'actionnement comportent un actionneur électromécanique (40) relié au pointeau par une liaison mécanique (41, 43).

11. Dispositif selon l'une quelconque des revendications 1 à 10, **caractérisé en ce que** les moyens d'actionnement comportent un arbre (41) muni d'un excentrique (43) engagé dans une gorge (16) formée dans la partie d'extrémité arrière du pointeau.

## Patentansprüche

1. Vorrichtung für veränderbaren Schub zum Steuern eines Raumfahrzeugs durch Erzeugung eines seitlich gerichteten Schubs, der im Wesentlichen rechtwinklig zu einer Hauptachse des Fahrzeugs verläuft, umfassend:
eine bewegliche Düsennadel (10);
einen Ventilkörper (20) mit einer die Nadel teilweise umgebenden Kammer (24), mindesten eine Gaseinlassöffnung (27), die in die Kammer mündet, und eine Gasaustrittsöffnung (25), die in die Kammer mündet und begrenzt wird von einem Teil der Wand, die zusammen mit einem Teil einer Nase (14) der Düsennadel einen Gasaustrittsquerschnitt für den Austritt des Gases aus der Kammer bestimmt; und
eine Betätigungseinrichtung (40, 41, 43) zum Steuern der Lage der Düsennadel in dem Ventilkörper durch Einwirken auf einen hinteren Endabschnitt der Düsennadel,
**dadurch gekennzeichnet, dass** die Nase (14) der beweglichen Düsennadel (10) ein aerodynamisches konkaves Profil (15) aufweist und der Bereich der Wand (29), der den Auslass (25) der Kammer begrenzt, derart ausgeformt ist, dass das austretende Gas im Wesentlichen in Richtung der Konkavität der Nase der Düsennadel gelenkt werden kann.

2. Vorrichtung nach Anspruch 1, **dadurch gekennzeichnet, dass** der Gasauslass (25) durch einen geometrischen Düsenhals (37) gebildet wird, der sich außerhalb des Gasauslasses an einen Auslaufansatz (34a) anschließt, welcher eine stark verkürzte Düse bildet.

3. Vorrichtung nach Anspruch 1, **dadurch gekennzeichnet, dass** sie außerhalb des Gasauslasses ohne auseinander laufende Düse ist.

4. Vorrichtung nach einem der Ansprüche 1 bis 3, **dadurch gekennzeichnet, dass** der Ventilkörper (20) in einen Treibgasgenerator (3) eingelassen ist.

5. Vorrichtung nach Anspruch 4, **dadurch gekennzeichnet, dass** die Betätigungseinrichtung in den Treibgasgenerator eingelassen ist und thermisch durch den Generator von Gasprodukten getrennt ist.

6. Vorrichtung nach einem der Ansprüche 1 bis 5, **dadurch gekennzeichnet, dass** der Ventilkörper (20) und die Düsennadel (10) aus einem Thermostruktur-Verbundstoff bestehen.

7. Vorrichtung nach Anspruch 5, **dadurch gekennzeichnet, dass** der Ventilkörper (20) und die Düsennadel (10) aus einem Keramikmatrix-Verbundstoff bestehen.

8. Vorrichtung nach einem der Ansprüche 1 bis 7, **dadurch gekennzeichnet, dass** die Düsennadel (10) über ihre gesamte Länge mit einer Axialbohrung (17) ausgestattet ist.

9. Vorrichtung nach einem der Ansprüche 1 bis 8, **dadurch gekennzeichnet, dass** die Betätigungseinrichtung vom Proportional-Typ ist.

10. Vorrichtung nach einem der Ansprüche 1 bis 9, **dadurch gekennzeichnet, dass** die Betätigungseinrichtung einen elektromechanischen Aktuator (40) aufweist, der mit der Düsennadel über eine mechanische Verbindung (41, 43) gekoppelt ist.

11. Vorrichtung nach einem der Ansprüche 1 bis 10, **dadurch gekennzeichnet, dass** die Betätigungseinrichtung eine Welle (41) aufweist, die mit einem Exzenter (43) ausgestattet ist, der in eine in einem hinteren Endabschnitt der Düsennadel ausgebildete Nut (16) eingreift.

## Claims

1. A modulatable thrust device for controlling an aerospace vehicle by generating lateral thrust directed substantially perpendicularly to the main axis of the vehicle, the thrust device comprising: a moving needle (10); a valve body (20) having a chamber (24) surrounding part of the needle, at least one gas admission (27) opening out into the chamber, and a gas outlet (25) opening out into the chamber and defined by a wall portion that co-operates with a portion of the nose (14) of the needle to define an outlet section for gas leaving the chamber; and actuator means (40, 41, 43) for controlling the position of the needle in the valve body by acting on a rear end portion of the needle,
the device being **characterised in that** the nose (14) of the moving needle (10) has an aerodynamic concave profile (15) and the wall portion (29) which defines the outlet (25) from the chamber is shaped in such a manner as to be capable of directing the escaping gas essentially against the concave shape of the nose of the needle.

2. A device according to claim 1, **characterised in that** the gas outlet (25) is formed by a throat (37) which on the outside of the gas outlet runs into the beginning of a diverging portion (38a) forming a very short nozzle.

3. A device according to claim 1, **characterised in that** it has no nozzle diverging portion on the outside of the gas outlet.

4. A device according to any one of claims 1 to 3, **characterised in that** the valve body (20) is immersed in a propulsion gas generator (3).

5. A device according to claim 4, **characterised in that** the actuator means are immersed in the propulsion gas generator (31) and are thermally insulated from the gases produced by the generator.

6. A device according to any one of claims 1 to 5, **characterised in that** the valve body (20) and the needle (10) are made of thermostructural composite material.

7. A device according to claim 5, **characterised in that** the valve body (20) and the needle (10) are made of ceramic matrix composite material.

8. A device according to any one of claims 1 to 7, **characterised in that** the needle (10) is provided with an axial bore (17) over its entire length.

9. A device according to any one of claims 1 to 8, **characterised in that** the actuator means are of the proportional type.

10. A device according to any one of claims 1 to 9, **characterised in that** the actuator means comprise an electromechanical actuator (40) connected to the needle via a mechanical link (41, 43).

11. A device according to any one of claims 1 to 10, **characterised in that** the actuator means comprise a shaft (41) provided with an eccentric (43) engaged in a groove (16) formed in the rear end portion of the needle.
